# EUROPEAN PATENT SPECIFICATION

(11) **EP 1 030 760 B1**
(45) Date of publication and mention of the grant of the patent: **07.04.2004**
(21) Application number: 98950565.6
(22) Date of filing: 12.10.1998
(51) Int. Cl.: B23K 1/00, B23K 1/002, B23K 1/06

(54) **METHOD FOR JOINING PARTS OF ALUMINIUM OR ALUMINIUM ALLOYS**
VERFAHREN ZUM VERBINDEN VON TEILEN AUS ALUMINIUM ODER ALUMIMIUMLEGIERUNGEN
PROCEDE PERMETTANT D'ASSEMBLER DES PIECES EN ALUMINIUM OU EN ALLIAGE D'ALUMINIUM

(30) Priority: 13.10.1997 SE 9703731
(43) Date of publication of application: 30.08.2000
(73) Proprietor: Berkowicz, Peter, 603 07 Norrköping (SE)
(72) Inventor: Berkowicz, Peter, 603 07 Norrköping (SE)
(74) Representative: Arwidi, Bengt
(86) International application number: PCT/SE1998/001838
(87) International publication number: WO 1999/019106

(56) References cited:
- EP-A1- 0 764 493
- US-A- 3 633 266
- US-A- 3 680 200
- US-A- 4 754 913
- US-A- 5 571 437

## Description

The present invention is for a method for joining parts of aluminium or aluminium alloys without the use of flux.

Joining metals through adhesion (soldering or brazing), that is, using additional materials for the joint, is already known. Joining metals through cohesion (i.e. molten metal welding or pressure welding), that is, when the materials applied for joining are forming a uniform state of material condition to each other, is also known. In the case of cohesion is it possible to heat the surfaces of the parts for joining to a non-liquid state and accomplish the joint through pressure.

When joining parts of aluminium, the joining method has turned out to be difficult to control, partly depending on the often narrow melting intervals of aluminium and its alloys and partly due to the fact the oxide layer -AL2O3- is a ceramic which heated to the actual temperature (about 600 C) has a strength and tenacity which isdifficult to penetrate. This contributes to the formation of an efficient barrier to prevent a reaction with e.g. a solder material. In this contest it should be pointed out that the melt temperature for AL2O3 is above 2 000 °C

A commercially important product aimed for manufacturing from aluminium is heat exchangers, provided a reliable joining technique for these parts is available. High demands are put on a commercial joining technique, especially when ammonium is used as a cooling medium in an exchanger. The working pressure can be as high as 40 bar.

WO 91/04825 and US-A-4 754 913 disclose a joining technique for aluminium parts where a tubular part is to be joined with a flange. At least one of the parts is clad befor joining and a vibrating mandrill is pushed into the tubular part, whereupon a vibration is introduced. Hence a "forced vibration" is superimposed on one of the parts and the active effect is a relative movement between the two parts, which contributes to the bond.

The technique disclosed in US-A-4 754 913 is also limited to the use of solder claddings of zinc. The method can shortly be described as a vibration welding which presumes that the joint parts, where a metallic bond is supposed, are in metallic contact with each other and exactly at that contact spot are moving relative to each other.

The Japanese summary 63-317 249 discloses a laminating technique for aluminium or aluminium alloys using clad materials, which under the influence of ultrasonic vibrations are brought to rapidly form a joint. The method presumes a high pressure with a degree of plastic deformation of 20 - 50 %, the correct temperature level, and a simultaneous concentration of ultrasonic to the joint. The method has a limited usage for flat joints with joint parts of clad sheets, where the ultrasonic only has the function to increase the welding speed.

DE-A-963 914 concerns electrical soldering bits for soldering of aluminium. The pointed soldering bit is thereby arranged movably and is applied in, or adjacent to the solder melt, and is designed to convey a vibration to a workpiece at a frequency of about 100 Hz. The soldering bit works like a vibrating drift, which penetrates the oxide layer.

DE-A-73 5 86 1, which is an addition to DE-A-720 629 concerns a technique, which generally states application of vibrations of a certain frequency in connection with joining of parts of aluminium.

US-A-3 680 200 concerns a technique for soldering of tubes with help of ultrasonic. The method presumes the application of a tube joint so that around the whole peripheries of male and female a controlled gap appears. The ultrasonic is applied sidewise on the male or the female so that the joint parts in the joint are moving against each other, whereby the oxide layer through friction and mechanical influence cracks when heated. The tolerances are set so that the minimum limit (0,05 mm) is the minimum distance needed for the ultrasonic to bring about friction through mechanical influence. The maximum limit is set to prevent the solder from flowing through the joint and disappearing from the joint spot. The method of the US patent may in accordance with what is stated in WO 91/04825, or in US-A-4 754 913, be characterized as a vibration welding, with thereupon valid requirements and conditions. In practice it would be next to impossible to apply a tube joint with the above mentioned dimension tolerances in a running production. Besides it can be mentioned that the solder already flows through the joint when the gaps are as small as 0,1 mm.

The object of the present invention is to achieve a joining technique which makes it possible that parts of aluminium and/ or aluminium alloys to be safely joined together in metallic bonds without the use of flux, and considering the material properties of both the parts which are to be joint together and even possible brazing/ solder material. The invention isfor both a method and a device for joining of aluminium and/or aluminium alloys.

This is achieved by that the method have the characteristics which are mentioned in the patent claims.

The technique mentioned in accordance with this invention is in no way dependent upon pressure or friction between the joint parts of the joint spot, where the metallic bonding is to take place between the parts, possibly under influence of a soldering material. The demand of tolerances on the joint parts is in fact of minor importance, since the solder is anticipated to have melted and in a liquid condition have filled up the joint space befor a metallic bonding takes place. A joint part consisting of a rather low alloy pure aluminium with a narrow melting point interval has a comparatively narrow temperature zone, where the basic material has the appropriate softness to allow the imposed vibrations ( ultrasonic ) to crack the oxide layer. The lower limit is about. 40 C under the lower limit of the melting interval - solidus. The upper limit is directly above solidus where the metal is so soft that the vibrations causes the joint to collapse. A joint part consisting of a high-alloy aluminium with a wide melting interval has another and also wider temperature zone, where imposed vibrations function accordingly to the invention. The lower limit is still about 40 C under solidus, but the upper limit may, due to the wider melting interval, be considerably above solidus. The composition of a solder/brazing material is so adapted that its melting interval fits to the melting intervals of the actual joint parts. This is because an exchange of metal crystals should be possible after the cracking of the oxide layer and at the actual temperature. This exchange of metal crystals creates a new metal alloy at the joint spot, the melting temperature of which is below that of the joint parts that are to be bonded together. It is also theortically possible to use this technique according to the invention for joining of parts without using a brazing/ solder material, provided high alloy metals or different alloys, are used in the parts, which are to be joined.

Because the heating is extended until a condition of softness ( befor solidus) is achieved in the basic material the application of mechanical vibration, with the aim to break the oxide layer (Al2O3), creates a possibility for initiating an exchange of metal crystals in the boundary zone between melted and not melted material. This exchange forms the desired metallic bond in the joint spot.

The method according to the invention means a combination of heating and application of vibrations, where the heating is conducted first to achieve softness of the base material in the actual joint parts. The frequency, effect, amplitude and duration of the vibration waves can be varied. Supervision of the actual heat distribution and the attained temperature rise, as well as control of both duration and amount of effect supplied regarding vibration and heating, to enable one to achieve the correct temperature distance with reference to the lower or upper limit temperature in accordance to solidus so that the exchange of metal crystals can take place, is an essential condition for a repetitive production process. The technique needed for this monitoring and control of the method according to the invention can be achieved by the skilled men of the art, i. e. a skilled automation engineer together with a metallurgist, why only the principles for this will be described below. This is also valid for the application of the vibrations, which spot can be chosen considering practical and production technology factors.

The joint that is to be formed between the joining parts must be designed with one part of the joint sidewise to the spot of bonding, with a very god fit between the parts. This because the melted solder must be held at its place and must not flow away, an even and effective heat distribution between the joint parts must be facilitated as well as an effective spread of vibration from one joint part to the other must be facilitated. The vibrations in the metal are consequently dependent on the frequency applied, the effect and the amplitude and those vibrations are reaching mor or less deep into the surface layers of the joint parts. A harder metal requires a higher vibration effect. The vibrations are also changed at a beginning softening of the metal. Even the application surface, i.e. the size of the surface for distribution of the vibrations to the metal parts, has importance for the outcome.

A supply of heat through induction has significance for the effect level and duration of the vibrations, that is, a decrease of the heating in connection with the application of vibrations results in increased marginals to the collapse of the material. A large amplitude in the vibrations normally results in a better ability to break the tenacious Al2O3-layer.

It is also possible to mainly to eliminate the Al2O3-layer through pickling, where the surface can be protected by a thin (e.g. 0,5 µm) zinc layer. Naturally this provides quite different conditions for the application of both vibrations and heating as well as the choice of brazing/ solder material and its composition.

To give a clearer view of the influence and interdependence of the above mentioned factors there follows below a description of a specific joint realization, where two flared tubes are to be connected with a tube bend. Both joints are supplied with rings of solder material. What is said below is generally applicable to all kinds of joints in aluminium and for all alloys for solder/ brazing, but the selected joint application is one of the mor difficult to realize. This is highly dependent on the prevailing asymmetrical conditions regarding heat distribution, and heat exchange with the surroundings. The heat loss from the straight tube parts is considerably higher than that from the tube bend, where instead an accumulation of heat will take place.

The choice of induction frequency controls the penetration depth of the inductive heating. Higher frequency generates smaller penetration depth, although the penetration depth increases with the heating of the metal. The other heat transmission in the joint takes place through thermal conduction. and / or thermal convection.

The better the fitting between the joint parts the mor of the heat transmission takes place as thermal conduction. In case of bad fitting the conduction is prevented because of thermal resistance, whereby the convective share increases. The convective share is the most difficult to estimate and control.

The tube part which takes the heat first also takes the thermal expansion first. When the flared tube part is heated first, the fitting in the joint may get lost and thereby generate a thermal resistance. The opposite is valid when the tube bend is heated first, but on the other hand the tube bend can be melted befor the flared tube part has reached the temperature level for finalising a satisfactory bond.

It is possible to heat both the tube bend and the flared tube parts at the same time byusing an inductance coil with double winds and thereby achieve a mor even temperature distribution within the necessary temperature interval and along the whole joint part which is to be bonded, which allows brazing/ welding to take place. With longer joint lengths mor heat can be transmitted through thermal conduction (linear function), but this will on the other hand increase the thermal asymmetry when heating with inductive heating.

When mechanical vibrations are applied to the joint after the melting of the solder/brazing material, a dynamic phase in the procedure is introduced. A new alloy is continuously established in the boundary zone between the partly melted surfaces in the joint between the parts according as time passes. Hence in an analysis in a phase chart the phase transformation curves for the solder- or base material (from solid to molten phase) at the joint spot changes its appearances. In this dynamic phase with applied vibrations, a continuos exchange of metal crystals between the metals of the joint parts and the melted solder material takes place, whereby the new alloy arisen in the boundary zone, successively gets an increased content of the parts of the solder material.

Through the application of the vibrations the temperature interval, within which one can temperaturewise increase the margins of operation, widens.

The main function of the solder/ brazing material is to bring about metallurgical effects in connection with vibrations to safeguard effective brazing/ solder procedures.

Ultrasonic welding is known as a conception and is mentioned in handbooks as a combination of friction- and pressure welding. Common for the describedapplications is the need for extensive equipment and tooling. It is also mentioned the need of high pressures and that the application of vibrations must be direct on the joint spot for bondage. This makes these methods difficult to apply, amongst other things because of too high costs, lack of space for bulky devices, uncertainty regarding penetration of the oxide layer, etc.

The technique according to this invention means quiet another point of attack through its approach to consider the actual course of events at the joint spot when heating and applying of vibrations, why less bulky devices and mor difficult applications (welding/ brazing / soldering of tube bends, etc.) can be realized. According to the invention it is possible to work with frequencies considerably under the ultrasonic and with extremely high amplitudes. This simplifies the distribution of vibrations in the metal to the joint. Obvious disadvantages are nevertheless a high noise level, demands on non-elastic and non-damping clamping of the joint parts and high demands on the temperature control. In fact frequencies under 15000 Hz are unsuitable because of the noise.

In a simple application using the invention the heating- and vibration procedures are roughly controlled, but on the other hand in a mor complex application, with high demands on a safe and faultless joint, the procedure is controlled by e.g. an optical temperature measurement where the thermometer via a processor is connected to the inductive heating- and the ultrasonic generators, whereby the temperature- and vibration procedure is simultaneously controlled in accordance with the measured temperatures. A possible complication is due to the possible variations of the thickness of the Al2O3-layer (2 to 10 µm), which means locally arising melt punctures in the form of small holes, through which the melt can flow away. The risk is highest at ( too ) high temperatures and vibrations. Trough pickling of a manageable joint part to an even thickness of the oxide layer, or to a complete removal of the layer, where the surface is then protected with a zinc-liner (0,5 µm), this complication can be managed. Joint parts not manageable in this way can be polished to an even oxide layer befor welding/ brazing.

The invention will now be described in accordance to the embodiment shown in the enclosed figures.
Figure 1 shows schematic a surface of a section of a joint spot to be between two parts in accordance with the technique of the invention, e.g. when joining a straight tube to a tube bend, where a brazing/ solder material is present at the joint spot, and the device for the accomplishment of the joining procedure.
Figure 2 shows an inductance coil for the method in accordance with the invention.
Figure 3 shows, partly in section, two tube parts which are joined to a tube bend and the device for this.

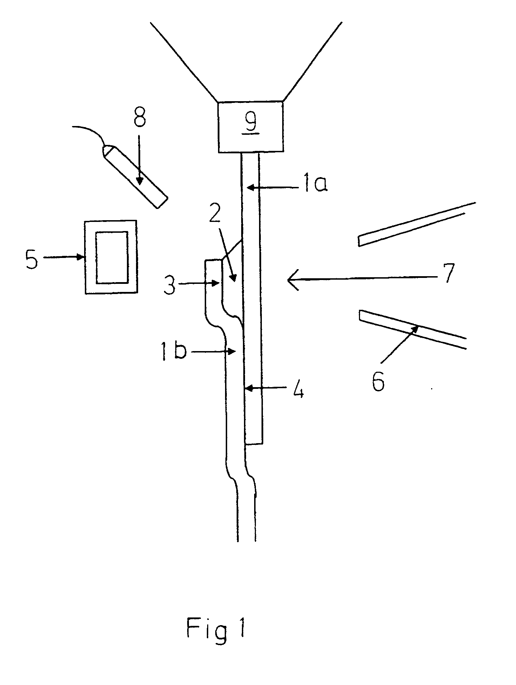

Figure 1 thus shows a surface of a section of a joint spot to be where a brazing/solder material 2 is present in connection to the joint or the joint spot 3, e.g. in the shape of a solder ring. The joint parts 1a and 1b have a god fitting at the contact surface 4. This good fitting contributes to lock the position of the joint parts to each other. The joint spot 3 is heated to the intended temperature zone with a heating source. This heating source can be an inductance coil 5, an hot-air insufflator 6 which blows hot air on the joint, or an open flame from a gas burner. The arrow 7 symbolises the supply of heat to the joint parts 1a and 1 b and to the joint to be. The achievement of the correct temperature is monitord by an optical temperature meter 8. Ultrasonic is applied with an acoustic transmitter 9 when the correct temperature is achieved in the joint spot, or mor specific, in the joint to be. The joining is facilitated by any form of temperature control for monitoring of temperature levels and for the possibility of temperature holding, with the aim to level out the temperature in the joint.

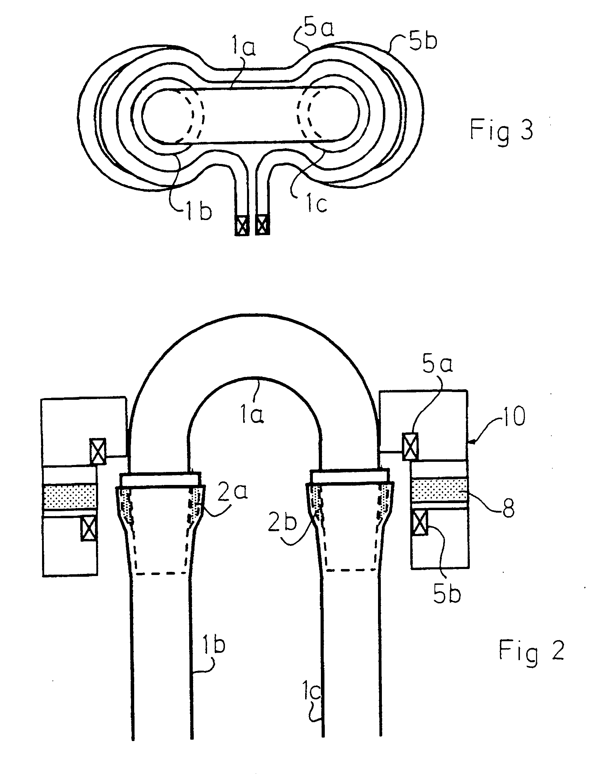

A practicable example of a befor mentioned way of realising the invention is shown in figure 2. The two tube parts 1B and 1 C are to be joint together with a tube bend 1A. The tube parts are flared in the parts nearest to the tube bend and includes there the resp. ends of the tube bend and surrounding solder rings 2A, 2B. The parts are clamped into the proper position with a fixture 10, preferably of ceramic material. For heating of the material there are two inductance coils 5A, 5B, whereby the in the figure lower coil, which surrounds the flared tube parts, is of somewhat bigger size than the upper coil. The shape of the inductance coils appears closer in figure 3. The outer parts of the inductance coils are shaped to give an optimal distribution of heat to the tubes and the tube bend. Hereby it is essential that the upper part which is the connecting male, that is, the tube bend in figure 2, is heated at least as fast as the lower part, that is, the connecting female. At the opposite situation the gap between the parts can be widened too much so that a flow out of the solder material can occur.

The figures also show that the ends of the flared tubes as well as the ends of the tube bend are shaped conical. The fitting between the tube parts and a possible solder ring is very essential for achieving the correct temperature distribution and preferably the ends of the tube parts are shaped to a conical form with an angle of ca 1:15. A bad fitting causes a reduced heat transmission and a reduced vibration transmission between the joint parts, which accordingly slows down the whole procedure and increases the risk for leaking joints.

The total cycle time for joining tube parts according to the above mentioned example is dependent on additional parameters. The material must first be heated to a temperature just below solidus, which e.g. for an aluminium alloy with the label AA3103 is 640 °C, means that heating is performed to 620-630 °C, preferably 625 °C. The time for the heating is dependent on the supplied effect and as an example it can be mentioned that when 5 kW effect is supplied the time is 18 sec., at 10 kW about 6 sec. After the heating follows a period of constant temperature holding at the achieved temperature level, where after the temperature level is somewhat lowered and the ultrasonic vibrations are applied. The time of the temperature holding should be somewhat increased with the effect used for the heating and varies usually within the interval of 15-25 sec., but with very good shape fitted parts, the holding time can be further reduced.

The ultrasonic vibrations are applied during a short time period, 1-5 sec., preferably 1-2 sec. The vibration frequency can vary within a wide interval, from about 360 Hz up to 60 000 Hz and even. higher. For practical reasons, such as available equipment, working environment etc., preferably a frequency above the audible region in the interval of 23 000-43 000 Hz, preferably 30 000-35 000 Hz, is chosen.

The invention is not limited to the above schematic, mentioned embodiments, modifications can be made within the framework of the below patent claims.

## Claims

1. Method for joining parts consisting of aluminium or alloys of aluminium, comprising heating of the parts which are clamped to a position for joining, **characterized in that** the heating of the materials is carried on until a temperature Tr below the melting point of the basic material is achieved and at which the basic material is in a condition of softness, holding the temperature at a constant level and then lowering the temperature level somewhat whereafter at least one of the parts, at a temperature Tu which is lower than the first achieved temperature Tr and not lower than about 40 °C under the lower limit of the melting interval, is subject to mechanical vibrations by application of ultrasonic sound of such kind and duration that oxide layers on the base material are cracked and a metallic bond is attained.

2. Method in accordance with daim 1, **characterized in that** the difference between the temperatures Tr-Tu is 1-25°C.

3. Method in accordance with daim 1, **characterized in that** the heating is conducted with hot air and/ or inductive heating to a temperature of Tr within the temperature interval of 500-650°C.

4. Method in accordance with claim 1, **characterized in that** the vibrations are within the interval of 360 - 60.000 Hz, whereby the vibrations ceases or are considerably reduced after 2 - 30 sec.

## Patentansprüche

1. Verfahren zum Verbinden von Teilen aus Aluminium oder Aluminiumlegierungen umfassend Erhitzung der Teile, die in einer Lage zum Verbinden festgespannt sind, **dadurch gekennzeichnet, dass** die Erhitzung des Materials bis zu einer Temperatur Tr unterhalb des Schmelzpunktes des Basismaterials erreicht ist und bei welcher das Basismaterial sich in einem Zustand der Weichheit befindet, durchgeführt wird, Aufrechterhaltung der Temperatur auf einem konstanten Niveau mit darauf folgendem geringem Absenken des Temperaturniveaus ein wenig, wonach mindestens ein der Teile, bei einer Temperatur Tu, die niedriger ist, als die soeben erst erreichte Temperatur Tr und nicht niedriger als 40 °C unterhalb der unteren Grenze des Schmelzintervalls liegt, mechanische Schwingungen ausgesetzt wird durch Anbringen von Ultraschall solcher Art und Dauer, dass die Oxydschichten auf dem Basismaterial zerbrechen und eine metallische Verbindung erreicht wird.

2. Verfahren nach Anspruch 1, **dadurch gekennzeichnet, dass** die Differenz zwischen den Temperaturen Tr - Tu 1 - 25 °C beträgt.

3. Verfahren nach Anspruch 1, **dadurch gekennzeichnet, dass** die Erhitzung mittels Heißluft und/oder induktive Erhitzung bis zu einer Temperatur Tr innerhalb des Temperaturintervalls 500 - 650 °C durchgeführt wird.

4. Verfahren nach Anspruch 1, **dadurch gekennzeichnet, dass** die Schwingungen innerhalb des Intervalls 360 - 60000 Hz liegen, wobei die Schwingungen nach 2 - 30 Sekunden abgebrochen oder wesentlich reduziert werden.

## Revendications

1. Procédé permettant d'assembler des pièces constituées d'aluminium ou d'alliages d'aluminium, comprenant le chauffage des pièces qui sont serrées à une position pour assemblage, **caractérisé en ce que** le chauffage des matériaux est effectué jusqu'à une température Tr inférieure à celle où le point de fusion du matériau de base est atteint et à laquelle le matériau de base est dans une condition de mollesse, le maintien de la température à un niveau constant, puis l'abaissement quelque peu du niveau de température après quoi au moins une des pièces, à une température Tu qui est inférieure à la première température atteinte Tr et non inférieure d'environ 40°C sous la limite inférieure de l'intervalle de fusion, est soumise à des vibrations mécaniques par l'application de son ultrasonore d'un type et d'une durée tels que les couches d'oxyde sur le matériau de base sont fissurées et qu'une liaison métallique est atteinte.

2. Procédé selon la revendication 1, **caractérisé en ce que** la différence entre les températures Tr-Tu est de 1 à 25°C.

3. Procédé selon la revendication 1, **caractérisé en ce que** le chauffage est conduit avec de l'air chaud et/ou un chauffage inductif à une température de Tr à l'intérieur de l'intervalle de température de 500 à 650°C.

4. Procédé selon la revendication 1, **caractérisé en ce que** les vibrations sont dans l'intervalle de 360 à 60 000 Hz, moyennant quoi les vibrations cessent ou sont considérablement réduites après 2 à 30 secondes.
